# EUROPÄISCHE PATENTANMELDUNG

(11) **EP 3 633 679 A1**
(43) Veröffentlichungstag der Anmeldung: **08.04.2020**
(21) Anmeldenummer: 19197168.8
(22) Anmeldetag: 13.09.2019
(51) Int. Cl.: G12B 5/00, G02B 7/00, G02B 7/02

(54) **VERSTELLBARER MECHANISCHER HALTER ZUR FEINJUSTAGE DER POSITION EINES ELEMENTS WIE EINER LINSE**

(30) Priorität: 02.10.2018 DE 102018216951
(71) Anmelder: Leica Microsystems CMS GmbH, 35578 Wetzlar (DE)
(72) Erfinder: Seifert, Roland, 69115 Heidelberg (DE)
(74) Vertreter: Grünecker Patent- und Rechtsanwälte PartG mbB

(57) **Zusammenfassung**

Die Erfindung betrifft einen verstellbaren mechanischen Halter (1) zur Feinjustage der Position eines am Halter (1) anbringbaren oder angebrachten Elements (17), insbesondere eines optischen Elements (19) wie einer Linse (21), wobei der mechanische Halter (1) einen stationären Befestigungsbereich (7) zur Befestigung des mechanischen Halters (1) an einer Haltestruktur (7a) und einen Haltebereich (15) zur Halterung des Elements (17) umfasst. Mechanische Halter (1) aus dem Stand der Technik haben einen komplizierten Aufbau und können aufgrund der notwendigen zueinander präzise ausgerichteten Bauelemente nicht beliebig verkleinert werden. In kleinen verfügbaren Bauräumen sind die Lösungen aus dem Stand der Technik somit nicht praktikabel. Der erfindungsgemäße mechanische Halter (1) verbessert die bekannten Lösungen dadurch, dass wenigstens eine erste Parallelogrammführung (31) zwischen dem Haltebereich (15) und dem Befestigungsbereich (7) vorgesehen ist, die den Haltebereich (15) beweglich mit dem Befestigungsbereich (7) verbindet und dass ferner ein erster beweglicher Aktuator (39) vorgesehen ist, mittels welchem der Haltebereich (15) durch die erste Parallelogrammführung (31) entlang einer ersten Raumrichtung (5a) beweglich ist.

## Beschreibung

Die Erfindung betrifft einen verstellbaren mechanischen Halter zur Feinjustage der Position eines am Halter anbringbaren oder angebrachten Elements, insbesondere eines optischen Elements wie einer Linse. Der mechanische Halter umfasst einen stationären Befestigungsbereich zur Befestigung des mechanischen Halters an einer Haltestruktur und einen Haltebereich zur Halterung des Elements.

Mechanische Halter bzw. Halterungen zur Halterung von Elementen, wie beispielsweise Sensoren, Messköpfe, Halteelemente für Kabel bzw. optische Lichtwellenleiter oder optischer Elemente wie beispielsweise Linsen, sind aus dem Stand der Technik bekannt. So sind beispielsweise Linsenhalterungen bekannt, die rein beispielhaft einen plattenförmigen Haltebereich aufweisen können, in welchem die Linse aufgenommen und befestigt ist, wobei der plattenförmige Haltebereich über Aktuatoren um in der Ebene des Haltebereichs liegende Rotationsachsen schwenkbar ist. Zumeist weisen die Aktuatoren Auflager auf, die über ein Spannelement, beispielsweise eine Feder, gegen die mit dem stationären Befestigungsbereich verbundenen Aktuatoren gespannt werden. Mechanische Halter aus dem Stand der Technik sind somit kompliziert aufgebaut und erfordern zudem eine präzise Abstimmung der verbauten Teile, wodurch sie bei Anwendungen mit sehr geringem verfügbaren Bauraum oftmals nicht verwendbar sind, da sie zu groß sind.

Eine Aufgabe der vorliegenden Erfindung ist es somit, einen verstellbaren mechanischen Halter bereitzustellen, der eine einfache und kompakte Bauweise aufweist, schnell und kostengünstig herstellbar ist sowie einfach handhabbar ist.

Der eingangs erwähnte verstellbare mechanische Halter löst die obigen Aufgaben dadurch, dass wenigstens eine erste Parallelogrammführung zwischen dem Haltebereich und dem Befestigungsbereich vorgesehen ist, die den Haltebereich beweglich mit dem Befestigungsbereich verbindet, und dass ferner ein erster beweglicher Aktuator vorgesehen ist, mittels welchem der Haltebereich durch die erste Parallelogrammführung entlang einer ersten Raumrichtung beweglich ist.

Ein erfindungsgemäßer mechanischer Halter weist einen einfachen Aufbau auf und kann sehr kompakt und kostengünstig hergestellt werden.

Im Folgenden werden weitere, jeweils für sich vorteilhafte Ausgestaltungen der Erfindung näher beschrieben. Die in den Ausgestaltungen angeführten technischen Merkmale können beliebig miteinander kombiniert oder gar weggelassen werden, sofern es nicht auf den mit dem weggelassenen technischen Merkmal erzeugten technischen Effekt ankommt.

Unter einem beweglichen Aktuator ist in dieser Offenbarung ein mechanisch bewegliches System zu verstehen, welches eine Bewegung generieren kann. Diese Bewegung kann dazu genutzt werden, um ein mit dem Aktuator, genauer mit einem beweglichen Teil des Aktuators, bewegungsübertragend verbundenes Element bezüglich einer feststehenden Basis zu bewegen.

Schrauben sind ein Beispiel für einfache mechanische Aktuatoren, wobei bevorzugt Stellschrauben bzw. Mikrometerschrauben verwendet werden, da diese aufgrund einer, im Vergleich zu Standardgewinden (beispielsweise metrische Gewinde), geringeren Gewindesteigung eine präzisere Bewegung des Aktuators und folglich des zu bewegenden Elements ermöglichen. Die verwendeten Schrauben, Stellschrauben oder Mikrometerschrauben können beispielsweise ein Betätigungselement, zum Beispiel in Form eines von Hand betätigbaren Schraubenkopfes, aufweisen, welches von einem Benutzer betätigt werden kann, um das bewegliche Teil des Aktuators zu bewegen. Beispiele für solche von Hand betätigbare Schrauben sind Rändelschrauben oder Flügelschrauben. Ferner können auch Aktuatoren vorgesehen sein, die mit Hilfe von elektrischen Motoren eine Bewegung des Aktuators ermöglichen. Diese können von einer Steuervorrichtung, beispielsweise einem Steuerungscomputer mit entsprechenden Befehlen, die der Bewegung des Aktuators zugeordnet sind, angesprochen und gesteuert werden.

Unter einer Parallelogrammführung ist ein mechanisches System zu verstehen, mittels welchem an einen Arm oder Schenkel befestigte Elemente im ursprünglichen Neigungswinkel (in der Ebene der Bewegung des Arms) verbleiben, selbst wenn der Arm entlang einer Bahn verkippt wird.

Eine Parallelogrammführung ist in der Form eines Parallelogramms aufgebaut, d.h. besitzt jeweils zwei Paar paralleler Seiten bzw. Schenkel, wobei die Schenkel zueinander verkippbar angeordnet sind. Ferner sind die Schenkel weder durch Strecken noch durch Stauchen in ihrer Länge veränderbar, sodass bei fester Lage eines ersten Schenkels und Verkippung eines zweiten, benachbart zum ersten Schenkel angeordneten Schenkels, ein vierter, dem zweiten Schenkel parallel gegenüberliegender Schenkel lediglich parallel versetzt identisch zum zweiten Schenkel verkippt wird. Ein dritter Schenkel, der dem ersten Schenkel gegenüberliegt, verbleibt in paralleler Orientierung zum ersten Schenkel, wird jedoch gemäß der Verkippung des zweiten und vierten Schenkels räumlich versetzt.

Ebenso kann der Aktuator eine lineare Bewegung anstelle einer Schwenkbewegung auf den Schenkel übertragen, das heißt, dass der Aktuator im Wesentlichen entlang der Ausrichtung des Schenkels orientiert und beweglich sein kann und diesen Schenkel in Betätigungsrichtung bewegt. Der somit bewegte Schenkel entspricht in der obigen (willkürlichen und nicht einschränkenden) Benennung der Schenkel dem vierten ausgelenkten Schenkel.

Der erfindungsgemäße erste Aktuator realisiert bevorzugt eine solche Auslenkung eines Schenkels, wobei ferner der Haltebereich mit dem vierten Schenkel mitbewegt wird und somit die Auslenkung des Haltebereichs realisiert wird. In einem solchen Fall verbleibt der dem bewegten vierten Schenkel gegenüberliegende zweite Schenkel ortsfest, wohingegen die zwischen dem ortsfesten zweiten Schenkel und dem linear bewegten vierten Schenkel befindlichen ersten und dritten Schenkel verkippt werden. Bei dieser Verkippung verbleiben diese parallel zueinander.

Die oben verwendete Nummerierung der Schenkel ist rein beispielhaft und nicht einschränkend. In der verwendeten Nummerierung erstrecken sich der zweite und vierte Schenkel zwischen dem Befestigungsbereich und dem Haltebereich, wohingegen der erste Schenkel in der Nähe des Befestigungsbereichs und der dritte Schenkel in der Nähe des Haltebereichs angeordnet ist. Die Schenkel sind im Uhrzeigersinn nummeriert und bilden ein Parallelogramm.

Insbesondere kann die erste Raumrichtung der Betätigungsrichtung entsprechenden, d.h. parallel zu dieser orientiert sein.

Der erste bewegliche Aktuator kann von einer Betätigungsseite aus betätigbar sein, d.h. zu dieser Betätigungsseite weisen.

Unter einer Feinjustage ist eine mögliche Verstellung des Haltebereichs im Bereich weniger Mikrometer bis hin zu wenigen Millimetern zu verstehen. Ein gesamter Verstellbereich eines Aktuators kann im Bereich weniger Millimeter liegen.

Die Haltestruktur kann beispielsweise ein Gerät sein, in welchem ein Element beweglich, d.h. verstellbar gehalten werden soll. Der Haltebereich kann komplementär zum aufzunehmenden Element ausgestaltet sein.

In einer weiteren Ausgestaltung des erfindungsgemäßen mechanischen Halters kann ein zweiter beweglicher Aktuator vorgesehen sein, wobei der zweite bewegliche Aktuator bewegungsübertragend mit einem biegesteifen Ausleger verbunden ist, über den ein Drehmoment auf mindestens einen Schenkel der ersten Parallelogrammführung übertragbar ist, wodurch der Haltebereich durch die erste Parallelogrammführung entlang einer zweiten Raumrichtung beweglich ist.

Die erste Parallelogrammführung kann somit verwendet werden, um mittels des ersten Aktuators den Haltebereich entlang einer ersten Raumrichtung und mittels des zweiten Aktuators den Haltebereich entlang der zweiten Raumrichtungen zu bewegen.

Insbesondere können die erste und zweite Raumrichtung senkrecht zueinander orientiert sein.

Besonders bevorzugt kann auch der zweite bewegliche Aktuator von der Betätigungsseite aus betätigbar sein, so dass beide, der erste und der zweite Aktuator zur Betätigungsseite weisen und von dieser aus zugänglich und betätigbar sein können.

Es kann weiterhin vorteilhaft sein, wenn in einer weiteren Ausgestaltung zumindest der mit dem Drehmoment beaufschlagbare Schenkel, beispielsweise der zweite Schenkel um eine Drehachse drehbar ist.

Eine Drehachse hat den Vorteil, dass die Rotation des mit dem Drehmoment beaufschlagten zweiten Schenkels durch diese Drehachse definiert wird, sodass die Rotation in einer Ebene erfolgt. Diese Rotationsebene kann insbesondere der Ebene entsprechen, in welcher alle Schenkel der ersten Parallelogrammführung liegen.

Das Drehmoment erzeugt lediglich eine Rotation, wenn eine Drehachse bereitgestellt ist. Die Drehachse kann sich zwischen der Parallelogrammführung und dem Befestigungsbereich befinden und kann insbesondere durch ein Scharnier oder einen Bereich verringerter Flexibilität ausgebildet sein. Ein solcher Bereich wird beispielsweise durch die Verwendung von weicherem Material bzw. die Verringerung der Materialdicke im Bereich der Drehachse realisiert.

Beispielsweise kann ein Filmscharnier vorgesehen sein, welches den biegesteifen Ausleger mit dem stationären Befestigungsbereich verbinden kann.

Der biegesteife Ausleger kann insbesondere in den zu rotierenden zweiten Schenkel der Parallelogrammführung übergehen. Die Anbindung der Parallelogrammführung an den Befestigungsbereich kann somit über diese Drehachse bzw. Kippstelle erfolgen.

Insbesondere kann das System aus Ausleger und zweitem Schenkel biegesteif bezüglich der Ebene der ersten Parallelogrammführung sein, sodass aufgrund der Ausgestaltung als Parallelogramm eine Winkelauslenkung, d.h. Verkippung des zweiten Schenkels auch auf den gegenüberliegenden vierten Schenkel übertragen werden kann.

In einer Ausgestaltung kann die Drehachse außerhalb der Parallelogrammführung liegen. In diesem Fall kann der erste Aktuator als Auflager für den ersten Schenkel der ersten Parallelogrammführung dienen. Der dem Befestigungsbereich zugewandte erste Schenkel der Parallelogrammführung kann gleitend entlang dieses Auflagers beweglich sein. Bei dieser gleitenden Bewegung des ersten Schenkels entlang des durch den ersten Aktuator gebildeten Auflagers verringert sich ein Winkel zwischen dem ersten und zweiten, sowie zwischen dem dritten und vierten Schenkel. Aufgrund der Parallelogrammmechanik wird der dritte Schenkel im Wesentlichen entlang der zweiten Raumrichtung bewegt.

Die Drehachse kann sich in einer weiteren Ausgestaltung auch in einem Eckpunkt des Parallelogramms, d.h. an einer Position, an welcher zwei benachbarte Schenkel beweglich miteinander verbunden sind, befinden. Beispielsweise kann eine solche Drehachse im Eckpunkt zwischen dem ersten und zweiten Schenkel angeordnet sein. Wird in dieser Ausgestaltung der zweite Schenkel durch das auf den Schenkel wirkende Drehmoment im Uhrzeigersinn um die Drehachse rotiert, so verbleibt der erste Schenkel ortsfest. Eine gleitende Lagerung am ersten Aktuator erfolgt in dieser Ausgestaltung nicht.

In einer weiteren vorteilhaften Ausgestaltung des mechanischen Halters kann mindestens eine zweite Parallelogrammführung zwischen dem Haltebereich und dem Befestigungsbereich vorgesehen sein, die den Haltebereich beweglich mit dem Befestigungsbereich verbindet, wobei ferner ein dritter, beweglicher Aktuator vorgesehen sein kann, mittels welchem der Haltebereich, unabhängig von einer Auslenkung der ersten Parallelogrammführung, durch die zweite Parallelogrammführung entlang einer dritten Raumrichtung beweglich ist. Eine solche Ausgestaltung hat den Vorteil, dass ein am Halter anbringbares oder angebrachtes Element in alle drei Raumrichtungen, die vorteilhafterweise senkrecht zueinander orientiert sind, bewegt, d.h. im Raum positioniert werden kann. Somit stellt diese Ausgestaltung einen verstellbaren, mechanischen dreidimensionalen Halter dar.

In einer besonders bevorzugten Ausgestaltung des erfindungsgemäßen mechanischen Halters kann auch der dritte bewegliche Aktuator von der Betätigungsseite aus betätigbar sein, so dass alle drei Aktuatoren zur Betätigungsseite weisen und von dieser aus zugänglich und betätigbar sein können. Dies hat den Vorteil, dass eine Verstellung des mechanischen Halters in alle drei Raumrichtungen von einer einzigen Seite des Halters aus, d.h. beispielsweise von der Betätigungsseite, möglich ist.

Insbesondere kann die zweite Parallelogrammführung senkrecht zur ersten Parallelogrammführung orientiert sein.

Ferner kann in einer weiteren Ausgestaltung ein biegesteifer zweiter Ausleger vorgesehen sein, der sich von einem Schenkel der zweiten Parallelogrammführung in eine Tiefenrichtung erstreckt, wobei die Tiefenrichtung im Wesentlichen senkrecht zur ersten Parallelogrammführung orientiert ist, wobei durch den biegesteifen zweiten Ausleger ein Drehmoment auf mindestens einen Schenkel der zweiten Parallelogrammführung übertragbar ist, wodurch der Haltebereich durch die zweite Parallelogrammführung entlang der dritten Raumrichtung beweglich ist.

Die zweite Parallelogrammführung kann analog der ersten Parallelogrammführung aufgebaut sein. Hierbei ist es besonders vorteilhaft, wenn ein Schenkel der zweiten Parallelogrammführung und ein Schenkel der ersten Parallelogrammführung, der zweite Schenkel, identisch sind.

Um Verwechslungen zu vermeiden, sollen im Folgenden - ebenso ohne Beschränkung der Allgemeinheit - die Schenkel der zweiten Parallelogrammführung als fünfter, sechster, siebenter und achter Schenkel bezeichnet werden. Die Nummerierung erfolgt analog dem Vorgehen bei der ersten Parallelogrammführung im Uhrzeigersinn und beginnend mit dem nahe des Befestigungsbereichs angeordneten Schenkel. Bei einer solchen Nummerierung kann der zweite Schenkel der ersten Parallelogrammführung dem achten Schenkel der zweiten Parallelogrammführung entsprechen.

Der biegesteife zweite Ausleger kann am sechsten oder achten Schenkel angeordnet sein und sich parallel zum fünften oder siebenten Schenkel der zweiten Parallelogrammführung erstrecken.

Bei Betätigung des dritten Aktuators wird folglich ein Drehmoment auf den sechsten (oder achten) Schenkel übertragen, der zu einer Rotation des mit dem Drehmoment beaufschlagten Schenkels führt. Diese Rotation wird aufgrund der Parallelogrammmechanik auch auf den jeweils anderen Schenkel, d.h. den achten (bzw. sechsten) Schenkel übertragen.

Derfünfte Schenkel der zweiten Parallelogrammführung, nahe des Befestigungsbereichs, verbleibt ortsfest, wohingegen der siebente Schenkel unter Beibehaltung der Parallelität zum fünften Schenkel entlang der dritten Raumrichtungen auslenkbar ist.

Die Rotation des sechsten oder achten Schenkels kann um eine zweite Drehachse erfolgen, welche senkrecht zur ersten Drehachse orientiert sein kann. Wird in der vorausgegangenen Erklärung lediglich von einer Drehachse gesprochen, so ist damit explizit die erste Drehachse, um welche der zweite Schenkel drehbar ist, gemeint.

Die zweite Drehachse kann besonders bevorzugt innerhalb der zweiten Parallelogrammführung angeordnet sein. Dies hat den Vorteil, dass bei Rotation des achten (oder sechsten) Schenkels keine parallele Verschiebung des fünften oder siebenten Schenkels erfolgt.

Besonders bevorzugt kann in einer weiteren Ausgestaltung des erfindungsgemäßen mechanischen Halters der zweite Ausleger innerhalb der zweiten Parallelogrammführung angeordnet sein.

Insbesondere bei dieser Ausgestaltung ist es weiter vorteilhaft, wenn die erste Parallelogrammführung einen zentralen, innerhalb der ersten Parallelogrammführung angeordneten Auslegerschenkel aufweist, der die Parallelogrammführung in zwei Teilparallelogramme aufteilt und an welchem der zweite Ausleger befestigt ist.

Ein solcher Auslegerschenkel kann eine Stützstruktur darstellen, die zum einen das durch den dritten Aktuator eingebrachte Drehmoment auch auf den vierten Schenkel der ersten Parallelogrammführung, als auch eine Verkippung des zweiten Schenkels auf den vierten Schenkel überträgt. Ferner hat eine solche Stützstruktur den Vorteil, dass ein von den Schenkeln der zweiten Parallelogrammführung gebildeter Innenraum genutzt werden kann, sodass ein kompakter mechanischer Halter erhalten wird.

Der Auslegerschenkel stützt somit die Konstruktion der Parallelogrammführungen, sodass eine Verwindung in den parallelen Schenkeln minimiert bzw. verhindert werden kann.

Gemäß einer weiteren Ausgestaltung können die Parallelogrammführungen monolithisch miteinander verbunden sein. Insbesondere können die Parallelogrammführungen auch monolithisch mit dem Befestigungsbereich und/oder dem Haltebereich verbunden sein.

So kann der mechanischer Halter Metall umfassen und aus einem Metall-Rohling durch spanende Bearbeitung, zum Beispiel Fräsen, hergestellt sein.

In einer weiteren vorteilhaften Ausgestaltung weisen die erste Parallelogrammführung und/oder die zweite Parallelogrammführung mindestens jeweils vier Gelenkbereiche auf, wobei durch die Gelenkbereiche ein Winkel zwischen benachbarten Schenkeln der entsprechenden Parallelogrammführung änderbar ist.

Die Gelenkbereiche können bevorzugt in der Nähe der Eckpunkte der Parallelogrammführung angeordnet sein.

Insbesondere können in einer Parallelogrammführung zwei Schenkel biegesteif und parallel zueinander angeordnet sein. Im Falle der ersten Parallelogrammführung sind dies der zweite und vierte Schenkel, im Falle der zweiten Parallelogrammführung der fünfte und siebente Schenkel. Diese Paare an Schenkeln werden durch ein weiteres Paar weiterer Schenkel parallel zueinander gehalten. Jeder Schenkel ist bevorzugt an seinen Enden mit jeweils einem weiteren Schenkel über mindestens einen Gelenkbereich verbunden.

In einer Ausgestaltung des mechanischen Halters können die Gelenkbereiche der Schenkel der Parallelogrammführung durch einen Bereich verringerter Steifigkeit ausgebildet sein.

Ein Bereich verringerter Steifigkeit kann beispielsweise durch eine lokal erniedrigte (beispielsweise durch mechanische, chemische oder optische Behandlung des Materials) Materialhärte und/oder verringerter Materialdicke im Vergleich zum umgebenden Material erreicht werden.

Insbesondere können die Gelenkbereiche reversibel elastisch auslenkbar sein. Dies ist zum Beispiel gewährleistet, wenn diese als Filmschamier bzw. Filmgelenk oder Federanbindung ausgestaltet sind. Ferner können die Gelenkbereiche vorgespannt sein, was mittels der Aktuatoren möglich ist. Mit anderen Worten kann ein Produktionszustand des mechanischen Halters, insbesondere die Lage der Schenkel der Parallelogrammführung nach der Herstellung des Halters nicht der Nullstellung im Betrieb des mechanischen Halters entsprechen.

Durch eine solche Vorspannung kann gewährleistet werden, dass der mechanische Halter jeweils in beide Richtungen der Raumrichtungen verstellbar ist.

Insbesondere kann in einer Ausgestaltung des erfindungsgemäßen mechanischen Halters lediglich der erste und der dritte Aktuator zum Vorspannen der entsprechenden Gelenkbereiche genutzt werden. Eine mit dem ersten Aktuator eingestellte Vorspannung kann beispielsweise ausreichend sein, um den ersten Ausleger gegen den zweiten Aktuator vorzuspannen.

Bevorzugt sind die Gelenkbereiche als reversibel elastisch auslenkbare Filmschamiere ausgestaltet. Allerdings können die Gelenkbereiche beispielsweise auch durch eine Achse und eine komplementäre Gabel ausgebildet sein. Eine solche Ausgestaltung hat den Vorteil, dass die Ebene, innerhalb welcher die Winkeländerung zwischen benachbarten Schenkeln einstellbar ist, klar definiert ist und eine Rotation eines Schenkels aus dieser Ebene heraus durch einen solchen Aufbau des Gelenkbereichs verhindert wird.

Um einer möglichen geringeren Verwindungssteifigkeit der Filmscharniere entgegenzuwirken, kann in einer weiteren Ausgestaltung des mechanischen Halters mindestens ein Stützschenkel vorgesehen sein, welcher mit der ersten und der zweiten Parallelogrammführung verbunden ist. Ein solcher Stützschenkel kann ein unerwünschtes Verwinden, beispielsweise eine sich unterscheidende Rotation des zweiten und vierten Schenkels der ersten Parallelogrammführung aus der Ebene der Parallelogrammführung heraus, verringern bzw. verhindern.

In einer weiteren Ausgestaltung können die erste Parallelogrammführung, die zweite Parallelogrammführung und der Stützschenkel näherungsweise ein bewegliches, den Befestigungsbereich mit dem Haltebereich beweglich verbindendes Parallelepiped ausbilden.

Ein solches Parallelepiped kann als Struktur verstanden werden, die aus mehreren Parallelogrammführungen zusammengesetzt ist. In einer Ausgestaltung kann jede der sechs Seiten des Parallelepipeds eine Parallelogrammführung sein.

In einer besonders bevorzugten Ausgestaltung kann das Parallelepiped in der Nullstellung als Würfel oder Quader beschreibbar sein. Dies hat den Vorteil, dass eine Auslenkung des Haltebereiches entlang einer der Raumrichtungen näherungsweise mit lediglich geringfügigen Abweichungen als lineare Bewegung angesehen werden kann.

Da ein aus insgesamt sechs Parallelogrammführungen bestehendes Parallelepiped überdeterminiert ist, können in einer weiteren Ausgestaltung des erfindungsgemäßen mechanischen Halters die jeweils dem Befestigungsbereich und/oder dem Haltebereich zugewandten Schenkel der ersten und der zweiten Parallelogrammführung jeweils eine geschlossene Seitenfläche eines Parallelepipeds ausbilden, wobei die Seitenflächen winkelfest sind. Eine solche Ausgestaltung hat den Vorteil, dass der mechanische Halter verwindungssteif ist und somit auch leicht biegsame Federgelenke verwendet werden können, die ein leichtes (d.h. mit geringem Kraftaufwand des Nutzers) Einstellen der Position des Haltebereiches ermöglichen.

Aufgrund der Ausgestaltung des mechanischen Halters mit geschlossenen Seitenflächen können jeweils zwei parallel zueinander angeordnete Parallelogramme des Parallelepipeds als jeweils einzelne Parallelogrammführung verstanden werden, da diese parallel zueinander angeordneten Parallelogramme durch die Seitenflächen in ihrer Bewegung gekoppelt bzw. synchronisiert sind.

Da die Seitenflächen winkelfest sind, bilden diese zudem keine dritte Parallelogrammführung aus.

In einer weiteren Ausgestaltung des erfindungsgemäßen mechanischen Halters kann der Haltebereich an einem Schenkel der ersten Parallelogrammführung befestigt und von den weiteren Schenkeln der Parallelogrammführung mechanisch entkoppelt sein. Bevorzugt kann der Haltebereich am vierten Schenkel der ersten Parallelogrammführung befestigt sein. Eine Befestigung an lediglich einem Schenkel hat den Vorteil, dass über die Gelenkbereiche zueinander auslenkbare Schenkel frei auslenkbar sind und keine zusätzliche mechanische Begrenzung der Auslenkung eines Schenkels aufgrund des Haltebereichs auftritt.

In einer weiteren vorteilhaften Ausgestaltung des erfindungsgemäßen mechanischen Halters können alle Aktuatoren von einer Seite des mechanischen Halters aus zugänglich sein.

Eine solche Ausgestaltung hat den Vorteil, dass der mechanische Halter auch bei geringem verfügbarem Bauraum und insbesondere bei eingeschränkter Zugänglichkeit zu diesem Bauraum verbaut und betrieben werden kann.

Die Zugänglichkeit aller drei Aktuatoren von einer Seite des mechanischen Halters, insbesondere von der Betätigungsseite aus, wird durch die Konstruktion, Orientierung und Anordnung der beiden Parallelogrammführungen und des biegesteifen Auslegers realisiert.

Durch die beiden Parallelogrammführungen kann erreicht werden, dass von den drei Aktuatoren generierte Bewegungen und daraus resultierende Kräfte allesamt in eine gemeinsame Richtung wirken. Durch die Konstruktion des mechanischen Halters kann jedoch jede der drei, in die gemeinsame Richtung wirkenden Kräfte in bevorzugt zueinander senkrecht stehende Bewegungen des am Halter anbringbaren oder angebrachten Elements umgesetzt werden.

Somit können alle drei Aktuatoren zu einer einzigen Seite, insbesondere der Betätigungsseite weisen und dennoch eine Bewegung des am Halter anbringbaren oder angebrachten Elements in unterschiedliche Raumrichtungen ermöglichen.

Die Umsetzung der drei in die gemeinsame Richtung wirkenden Kräfte der drei Aktuatoren in jeweilige, bevorzugt zueinander senkrecht erfolgende Bewegungen basiert somit auf der Anordnung der Parallelogrammführungen am biegesteifen Ausleger, mit entsprechenden Drehachsen und Auflagepunkten (entlang denen ein Schenkel verschoben werden kann).

Jede der drei durch die jeweiligen Aktuatoren generierten und in die gemeinsame Richtung wirkenden Kräfte wirkt an einer unterschiedlichen Position der Konstruktion des mechanischen Halters. Dies führt zu einer jeweils unterschiedlichen Auslenkung desselben. Der erste Aktuator bewirkt beispielsweise eine Verkippung des zweiten Schenkels, wohingegen eine Betätigung des zweiten Aktuators zu keiner Änderung der Lage und Position des zweiten Schenkels führt, jedoch eine Lageänderung des vierten Schenkels unter Beibehaltung dessen Parallelität zum zweiten Schenkel und unter Winkeländerungen des ersten und dritten Schenkels bezüglich des zweiten und vierten Schenkels hervorruft.

Eine Betätigung des dritten Aktuators resultiert in einer Verbiegung bzw. Verkippung der ersten Parallelogrammführung aus dessen ursprünglicher Ebene heraus bzw. in diese hinein.

Hierbei werden Innenwinkel der ersten Parallelogrammführung nicht verändert. Die Betätigung des dritten beweglichen Aktuators zur Verschiebung der zweiten Parallelogrammführung gleicht jener Bewegung der ersten Parallelogrammführung, die durch Betätigung des ersten Aktuators realisiert wird.

Unterschiedlich in beiden Bewegungen sind jedoch die Drehachse und die Orientierung der Ebenen der Parallelogrammführungen im Raum. Sowohl die beiden entsprechenden Drehachsen, als auch die beiden entsprechenden Ebenen sind bevorzugt senkrecht zueinander orientiert.

Der mechanische Halter kann somit selbst in einer Art Tasche oder Vertiefung eines Gerätes befestigt sein und ist trotzdem von der einen Öffnung aus in allen drei Raumrichtungen verstellbar sein.

Ferner kann eine einzige Werkzeugöffnung vorgesehen sein, über welche beispielsweise ein Schraubendreher oder Inbusschlüssel am mechanischen Halter angesetzt werden kann, um diesen in einer beliebigen Raumrichtung zur Feinjustage zu verstellen.

Besonders bevorzugt sind der Befestigungsbereich, der Haltebereich und die zwei Parallelogrammführungen des erfindungsgemäßen verstellbaren Halters monolithisch ausgestaltet, der Haltebereich über drei unabhängige Aktuatoren in drei zueinander senkrechte Raumrichtungen verstellbar und alle Aktuatoren von lediglich einer Seite des Halters zugänglich.

Im Folgenden soll der erfindungsgemäße verstellbare Halter anhand beispielhafter Zeichnungen näher beschrieben werden. Die Zeichnungen stellen lediglich eine spezifische Ausgestaltung des beanspruchten mechanischen Halters dar, wobei diese Ausgestaltung nicht als den beanspruchten Schutzumfang einschränkend verstanden werden soll. Letzterer ist durch die Ansprüche definiert. In den Zeichnungen werden technische Merkmale und technische Merkmale gleicher Funktion mit denselben Bezugszeichen beschriftet. Einzelne technische Merkmale können beliebig miteinander kombiniert und/oder weggelassen werden, sofern es nicht auf den mit dem weggelassenen technischen Merkmal erzeugten technischen Effekt ankommt.

Es zeigen:
- Fig. 1: eine erste perspektivische Ansicht einer Ausgestaltung des erfindungsgemäßen mechanischen Halters;
- Fig. 2: eine Vorderansicht des mechanischen Halters der Fig. 1;
- Fig. 3: eine Seitenansicht des mechanischen Halters der Fig. 1;
- Fig. 4: eine zweite perspektivische Ansicht des mechanischen Halters der Fig. 1;
- Fig. 5: Verdeutlichung der Verstellung des mechanischen Halters entlang der ersten Raumrichtung: Ruhestellung;
- Fig. 6: Verdeutlichung der Verstellung des mechanischen Halters entlang der ersten Raumrichtung: ausgelenkte Stellung;
- Fig. 7: Verdeutlichung der Verstellung des mechanischen Halters entlang der zweiten Raumrichtung: Ruhestellung;
- Fig. 8: Verdeutlichung der Verstellung des mechanischen Halters entlang der zweiten Raumrichtung: ausgelenkte Stellung;
- Fig. 9: Verdeutlichung der Verstellung des mechanischen Halters entlang der dritten Raumrichtung: Ruhestellung;
- Fig. 10: Verdeutlichung der Verstellung des mechanischen Halters entlang der dritten Raumrichtung: ausgelenkte Stellung.

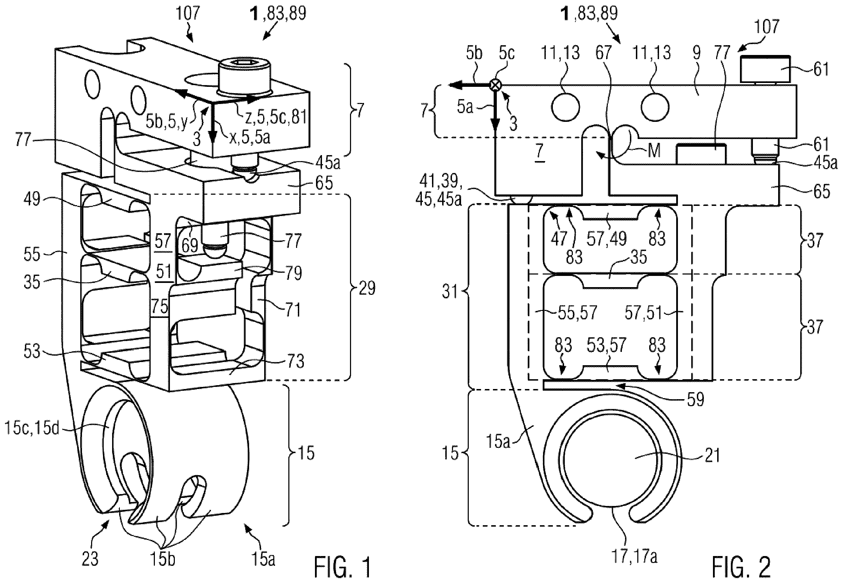

Der verstellbare mechanische Halter 1 ist in den Fig. 1 bis 4 aus unterschiedlichen Perspektiven dargestellt. Die folgende Beschreibung bezieht sich auf diese vier Figuren, wobei an geeigneter Stelle auf die Sichtbarkeit technischer Merkmale in einzelnen Figuren hingewiesen wird.

In den Figuren ist jeweils ein kartesisches Koordinatensystem 3 eingezeichnet. Dieses zeigt drei Raumrichtungen 5, die senkrecht zueinander orientiert sind und durch die x-Achse x, die y-Achse y und die z-Achse z beschrieben werden können. Die Bezeichnung der drei Raumrichtungen 5 ist rein beispielhaft und nicht einschränkend gewählt, d.h. dass auch von der hier gewählten Definition der Raumrichtungen 5 abweichende Koordinatensysteme 3 von der vorliegenden Offenbarung erfasst sind.

Die positive Richtung der x-Achse stellt rein beispielhaft und nicht einschränkend eine erste Raumrichtung 5a dar. Entsprechend ist eine zweite Raumrichtung 5b entlang der y-Achse und eine dritte Raumrichtung 5c entlang der z-Achse orientiert.

Der mechanische Halter 1 erstreckt sich insbesondere entlang der ersten Raumrichtung 5a, weist eine geringere Ausdehnung entlang der zweiten Raumrichtung 5b und die geringste Ausdehnung entlang der dritten Raumrichtung 5c auf.

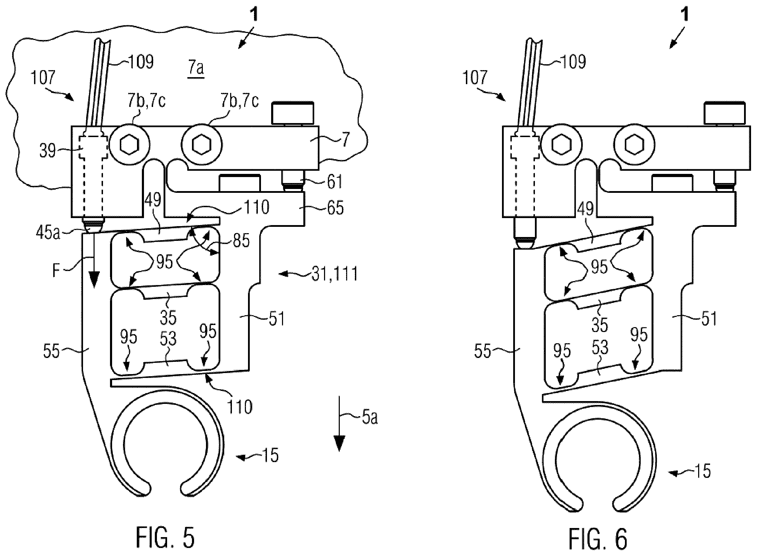

Der mechanische Halter 1 umfasst einen stationären Befestigungsbereich 7, der beispielsweise an einer Haltestruktur 7a (siehe Fig. 5) befestigbar ist. Der stationäre Befestigungsbereich 7 ist in der gezeigten Ausgestaltung des mechanischen Halters 1 ein L-förmiger verwindungssteifer Körper 9, der in der gezeigten Ausgestaltung zwei Befestigungsöffnungen 11 in Form von Bohrungen 13 aufweist.

Ferner umfasst der mechanische Halter 1 einen Haltebereich 15, in welchem ein Element 17, insbesondere ein optisches Element 19, wie eine Linse 21, aufgenommen werden kann (siehe Fig. 2). Der Haltebereich 15 kann eine Haltestruktur 15a, beispielsweise in Form von mehreren Halterfingern 15b, sowie einen Anschlag 15c, hier in Form einer Wandung 15d, aufweisen.

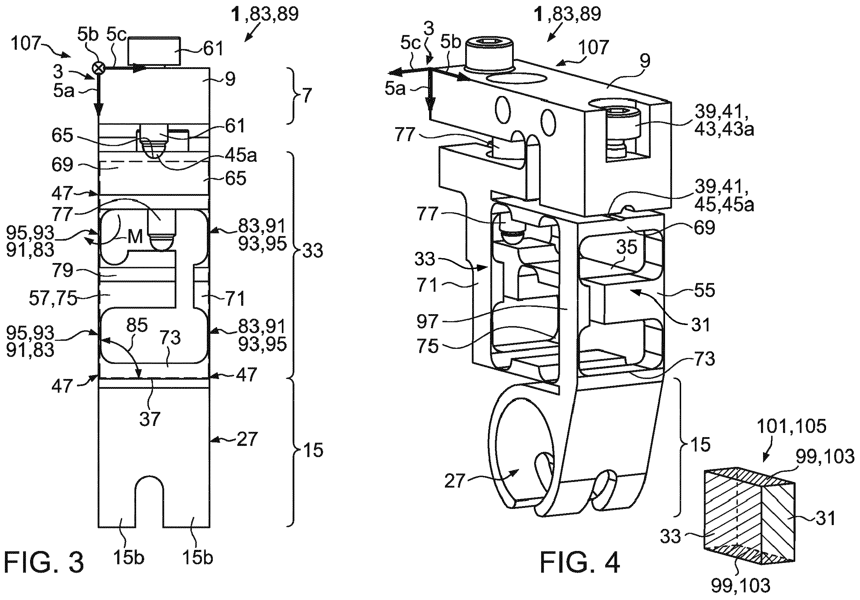

Die Wandung15d befindet sich an einem Ende 23 eines zylinderförmigen Haltevolumens 25, welches sich zwischen den Haltefingern 15b befindet bzw. von diesen definiert wird. Das Haltevolumen 25 ist entgegen der dritten Raumrichtung 5c über eine Halteöffnung 27 zugänglich (siehe Fig. 4), über welche das Element 17 in den Haltebereich 15 einsetzbar ist, wobei das Element 17 an der Wandung 15d anliegt, was eine vorab definierte Lage und/oder Orientierung des Elements 17 gewährleistet.

Entlang der ersten Raumrichtung 5a gesehen befindet sich zwischen dem Befestigungsbereich 7 und dem Haltebereich 15 wenigstens eine Parallelogrammführung 29.

Eine erste Parallelogrammführung 31 ist in Fig. 2 eingezeichnet und durch eine gestrichelte Linie verdeutlicht. Die erste Parallelogrammführung 31 ist durch einen Auslegerschenkel 35 in zwei Teilparallelogramme 37 aufgeteilt, wobei die Teilparallelogramme 37 ebenfalls durch die gestrichelte Linie dargestellt bzw. getrennt gezeichnet sind.

Mittels der ersten Parallelogrammführung 31 ist der Befestigungsbereich 7 mit dem Haltebereich 15 bewegungsübertragend, d.h. beweglich verbunden. Mit anderen Worten kann durch die erste Parallelogrammführung 31 eine Position 17a des Elements 17 durch die Änderung der Position 17a des Haltebereichs 15 bezüglich des Befestigungsbereichs 7 variiert werden.

Eine solche Variation der Position 17a kann durch einen ersten Aktuator 39 realisiert werden. Der erste Aktuator 39 ist in Fig. 2 und Fig. 4 erkennbar, wobei der erste Aktuator 39 als Mikrometerschraube 41 ausgestaltet ist. Die Mikrometerschraube 41 weist ein Betätigungsende 43 und ein Auflageende 45 auf. Das Betätigungsende 43 ist beispielsweise ein mit einem Werkzeug (nicht gezeigt, siehe Fig. 5 bis Fig. 10) betätigbarer Schraubenkopf 43a und das Auflageende 45 ein Kugelauflager 45a.

Der erste Aktuator 39 ist entlang der ersten Raumrichtung 5a orientiert und ebenso entlang dieser ersten Raumrichtung 5a beweglich.

Das Kugelauflager 45a liegt auf einer Ecke 47, die von einem ersten Schenkel 49 und einem vierten Schenkel 55 gebildet wird. Parallel zum ersten Schenkel 49 ist ein dritter Schenkel 53 und parallel zum vierten Schenkel 55 ein zweiter Schenkel 51 angeordnet. Diese vier Schenkel 57 bilden die erste Parallelogrammführung 31.

In der ersten Raumrichtung 5a mündet der vierte Schenkel 55 in der Haltestruktur 15a des Haltebereichs 15. Der Haltebereich 15 ist somit an diesem Schenkel 57, d.h. dem vierten Schenkel 55 mit der ersten Parallelogrammführung 31, verbunden und von weiteren Schenkeln 57, insbesondere vom dritten Schenkel 53 mechanisch entkoppelt.

Zwischen dem dritten Schenkel 53 und der Haltestruktur 15a ist ein Zwischenraum 59 angeordnet. In diesem Zwischenraum 59 kann der dritte Schenkel 53 hinein bewegt werden. Ferner weist der mechanische Halter 1 einen zweiten Aktuator 61 auf, der ähnlich dem ersten Aktuator 39 ausgestaltet ist. Der zweite Aktuator 61 liegt mit seinem Kugelauflager 45a in einer Führungsnut 63 eines biegesteifen Auslegers 65 auf.

Auch der zweite Aktuator 61 ist entlang der ersten Raumrichtungen 5a orientiert und in dieser beweglich.

Über den zweiten Aktuator 61 ist ein Drehmoment M, was an einer ersten Drehachse 67 angreift, auf den biegesteifen Ausleger 65 und mindestens einen Schenkel 57 der ersten Parallelogrammführung 31 übertragbar. Insbesondere wird das Drehmoment M auf den zweiten Schenkel 51 übertragen.

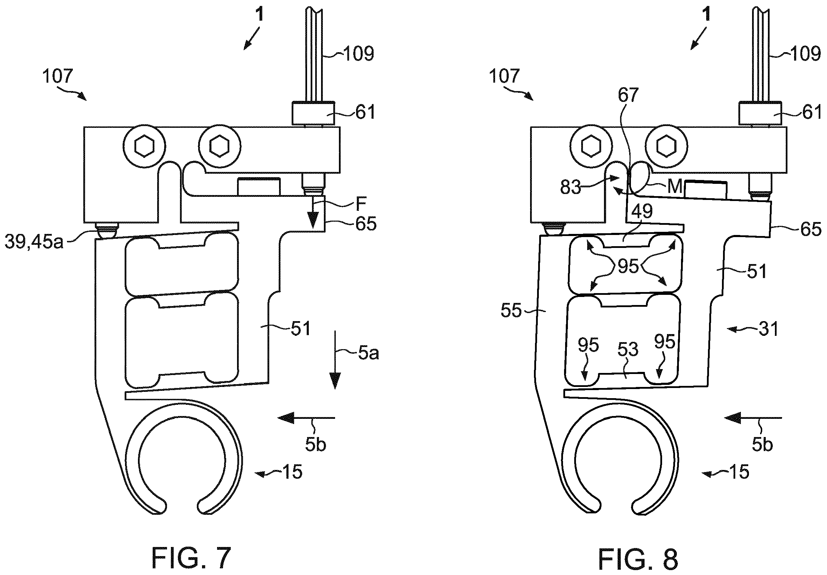

Das wirkende Drehmoment M bewirkt eine Rotation des biegesteifen Auslegers 65 um die erste Drehachse 67, wodurch der Haltebereich 15 entlang der zweiten Raumrichtungen 5b beweglich ist. Diese Bewegung wird später anhand der Fig. 7 und Fig. 8 näher erläutert.

Die gezeigte Ausgestaltung des erfindungsgemäßen mechanischen Halters 1 umfasst ferner eine zweite Parallelogrammführung 33, die in Fig. 3 gezeigt und durch eine gestrichelte Linie dargestellt ist.

Die zweite Parallelogrammführung 33 weist ebenso vier Schenkel 57 auf, die, um Verwechslungen zu vermeiden, als fünfter Schenkel 69, sechster Schenkel 71, siebenter Schenkel 73 und achter Schenkel 75 bezeichnet werden.

Auch die zweite Parallelogrammführung 33 ist zwischen dem Haltebereich 15 und dem Befestigungsbereich 7 angeordnet und verbindet den Haltebereich 15 beweglich mit dem Befestigungsbereich 7.

Über einen dritten Aktuator 77 ist der Haltebereich 15 unabhängig von einer Auslenkung der ersten Parallelogrammführung 31 durch die zweite Parallelogrammführung 33 entlang der dritten Raumrichtungen 5c auslenkbar.

Auch der dritte Aktuator 77 ist entlang der ersten Raumrichtungen 5a orientiert und beweglich.

Der dritte Aktuator 77 liegt an einem biegesteifen zweiten Ausleger 79 an, der sich von einem Schenkel 57, insbesondere vom achten Schenkel 75, der zweiten Parallelogrammführung 33 in eine Tiefenrichtung 81, die der z-Achse bzw. der dritten Raumrichtung 5c entspricht, erstreckt.

Die Tiefenrichtung 81 ist insbesondere senkrecht zur ersten Parallelogrammführung 31 orientiert.

Mittels des dritten Aktuators 77 ist durch den biegesteifen zweiten Ausleger 79 ein Drehmoment M auf einen Schenkel 57, insbesondere den achten Schenkel 75, übertragbar, wodurch der Haltebereich 15 durch die zweite Parallelogrammführung 33 entlang der dritten Raumrichtung 5c beweglich ist.

Wie besonders aus Fig. 3 erkennbar ist, erstreckt sich der zweite Ausleger 79 in die zweite Parallelogrammführung 33 hinein.

In einer weiteren Ausgestaltung kann der zweite Ausleger 79 auch am sechsten Schenkel 71 angeordnet sein und sich von diesem in die dritte Raumrichtungen 5c erstrecken.

Der in den Figuren gezeigte mechanische Halter 1 ist ein monolithischer Halter 83, d.h. das der Befestigungsbereich 7, der Haltebereich 15 sowie die beiden Parallelogrammführung in 31 und 33 monolithisch miteinander verbunden sind und beispielsweise aus einem Rohling (nicht gezeigt) durch Fräsen hergestellt worden sind.

Wie in den Figuren ersichtlich, ist der zweite Ausleger 79 am Auslegerschenkel 35 befestigt, wobei der Auslegerschenkel 35 zentral innerhalb der ersten Parallelogrammführung 31 angeordnet ist.

Die Schenkel 57 sowohl der ersten Parallelogrammführung 31, als auch der zweiten Parallelogrammführung 33 weisen mindestens jeweils vier Gelenkbereiche 83 auf. Diese sind in den Ansichten der Fig. 2 und Fig. 3 eingezeichnet.

Die Gelenkbereiche 83 sind bevorzugt in der Nähe der Ecken 47 der jeweiligen Parallelogrammführung 31, 33 angeordnet. In Fig. 2 ist lediglich eine Ecke 47, in Fig. 3 der Übersichtlichkeit halber nur drei Ecken 47 eingezeichnet.

Die Gelenkbereiche 83 erlauben die Änderung eines Winkels 85 zwischen den Schenkeln 57 der beiden Parallelogrammführungen 31, 33.

In einem in Fig. 1 bis Fig. 4 gezeigten Ruhezustand 89 des mechanischen Halters 1 beträgt der Winkel 85 im Wesentlichen 90°. Der Winkel 85 ist lediglich in Fig. 3 zwischen dem siebenten Schenkel 73 und dem achten Schenkel 75 eingezeichnet.

Aufgrund der Ausgestaltung als Parallelogramm 37 sind diagonal gegenüberliegende Winkel 85 gleich groß. Die beiden verbleibenden Winkel sind auf einfache Art und Weise mittels des Innenwinkels eines Viereckes ermittelbar.

Die Gelenkbereiche 83 sind durch Bereiche verringerter Steifigkeit 91 ausgebildet. Mit anderen Worten ist in diesen Bereichen entweder eine geringere Materialhärte bereitgestellt und/oder eine geringere Materialdicke im Vergleich zum Material bzw. der Dicke des betrachteten Schenkels 57.

In der gezeigten Ausgestaltung des mechanischen Halters 1 ist die verringerte Steifigkeit durch Bereiche verringerter Materialdicke 93 realisiert, sodass die Gelenkbereiche 83 in Form von reversibel elastisch auslenkbaren Filmgelenken 95 bereitgestellt sind.

Die Filmgelenke 95 sind lediglich in Fig. 3 für die zweite Parallelogrammführung 33 eingezeichnet, allerdings sind die Gelenkbereiche 83 der ersten Parallelogrammführung 31 ebenso als Filmgelenke 95 ausgestaltet.

In Fig. 4 ist ferner ein Stützschenkel 97 gezeigt, der mit der ersten Parallelogrammführung 31 und der zweiten Parallelogrammführung 33 verbunden ist. Dieser Stützschenkel 97 dient vorrangig dazu, die über die Filmgelenke 95 verbundenen Schenkel 57 beweglich miteinander zu koppeln, ohne dass eine Verwindung, d.h. beispielsweise eine unterschiedliche Auslenkung des zweiten 51 und des dritten Schenkels 57 zueinander auftritt.

Die dem Befestigungsbereich 7 und dem Haltebereich 15 zugewandten Schenkel 57 der ersten 31 und der zweiten Parallelogrammführung 33 können dafür insbesondere eine geschlossene Seitenfläche 99 eines derart geformten Parallelepipeds 101 ausbilden. Die Seitenflächen 99 sind dabei winkelfest, d.h., dass in Richtung der ersten Raumrichtungen 5a gesehen keine Parallelogrammführung 29 ausgebildet ist.

Zur Verdeutlichung des Parallelepipeds 101 und der winkelfesten geschlossenen Seitenflächen 99 sind diese schematisch neben dem mechanischen Halter 1 in Fig. 4 dargestellt. Die geschlossenen Seitenflächen 99 sind mittels einer Schraffur 103 eingezeichnet. Bevorzugter Weise ist das Parallelepiped 101 ein Quader 105, da somit eine Auslenkung der Schenkel 57 zu einer näherungsweise linearen Auslenkung entlang einer der drei Raumrichtungen 5a, 5b und 5c führt.

Wie aus Fig. 1 bis Fig. 4 ersichtlich, sind alle Aktuatoren 39, 61 und 77 entlang der dritten Raumrichtungen 5a orientiert und von einer einzigen Seite 107, einer Betätigungsseite 107 zugänglich.

Im Folgenden werden anhand der Fig. 5 bis Fig. 10 jeweils einzeln die Auslenkung des erfindungsgemäßen mechanischen Halters 1 entlang jeder der drei Raumrichtungen 5a, 5b und 5c beschrieben.

Die Fig. 5 und Fig. 6 beschreiben die Auslenkung des Haltebereichs 15 entlang der ersten Raumrichtung 5a.

Ferner zeigt Fig. 5 die Befestigung des Befestigungsbereichs 7 an der Haltestruktur 7a (beispielsweise an einer Wand) mittels Befestigungselemente 7b, im gezeigten Fall zweier Schrauben 7c.

Für eine Bewegung des Haltebereichs 15 entlang der ersten Raumrichtung 5a wird der erste Aktuator 39 (dieser ist vom L-förmigen verwindungssteifen Körper 9 verdeckt und daher gestrichelt eingezeichnet) mittels eines Werkzeugs 109 betätigt und in die erste Raumrichtung 5a in den mechanischen Halter 1 hineingeschraubt.

Das Kugelauflager 45a übt eine Kraft F entlang der ersten Raumrichtung 5a auf den vierten Schenkel 55 der ersten Parallelogrammführung 31 aus.

Der zweite Schenkel 51 ist aufgrund des ersten Auslegers 65 über den zweiten Aktuator 61 unbeweglich gegenüber dem stationären Befestigungsbereich 7.

Durch die Kraft F wird nunmehr jedes der Filmgelenke 95 elastisch und reversibel ausgelenkt, sodass sich der vierte Schenkel 55 in die erste Raumrichtung 5a bewegt und dabei den ersten 49 und den dritten Schenkel 53 durch die Filmgelenke 95 verkippen. Da der Haltebereich 15 mit dem vierten Schenkel 55 verbunden ist, bewegt sich dieser auch entlang der ersten Raumrichtung 5a.

Vergleicht man die Darstellung des mechanischen Halters 1 der Fig. 5 mit jener der Fig. 2, so ist eine leichte Neigung 110 sowohl des ersten 49, als auch des dritten Schenkels 53 zu erkennen. Mit anderen Worten ist der Winkel 85 zwischen dem ersten Schenkel 49 und dem zweiten Schenkel 51 kleiner als 90°. Dies rührt daher, dass mittels des ersten Aktuator 39 eine Vorspannung 111 auf die erste Parallelogrammführung 31 angewandt wurde. Dies ermöglicht es, den ersten Aktuator 39 entgegen der ersten Raumrichtung 5a zu bewegen, wobei sich der Haltebereich 15 auch in diese Richtung bewegt.

Sofern die in Fig. 2 gezeigte Ausrichtung des mechanischen Halters 1 als Nullstellung angesehen wird, bewirkt eine Bewegung des ersten Aktuator 39 entgegen der ersten Raumrichtungen 5a lediglich, dass sich der erste Aktuator 39 vom vierten Schenkel 55 entfernt, ohne jedoch eine Bewegung des vierten Schenkels 55 entgegen der ersten Raumrichtung 5a zu bewirken.

Bei der in Fig. 5 und Fig. 6 gezeigten Bewegung wird eine Parallelität zwischen dem zweiten 51 und vierten Schenkel 55 beibehalten. Ebenso sind der erste Schenkel 49, der Auslegerschenkel 35 und der dritte Schenkel 53 während der gesamten Bewegung parallel zueinander orientiert.

In den Fig. 7 und 8 ist eine Bewegung des Haltebereichs 15 entlang der zweiten Raumrichtung 5b gezeigt.

Für eine solche Bewegung wird der zweite Aktuator 61 mittels des Werkzeugs 109 betätigt, insbesondere entlang der ersten Raumrichtung 5a in den mechanischen Halter 1 eingeschraubt.

Die durch den zweiten Aktuator 61 auf den ersten Ausleger 65 ausgeübte Kraft F führt aufgrund der drehbaren Lagerung des ersten Auslegers 65 und des mit diesem fest verbundenen zweiten Schenkels 51 zu einem Drehmoment M, welches an der Drehachse 67 angreift.

Dieses Drehmoment M führt zu einer Rotation des ersten Auslegers 65 und des zweiten Schenkels 51 um die Drehachse 67.

Diese Rotation führt dazu, dass der erste Schenkel 49, der am Kugelauflager 45a des ersten Aktuators 39 anliegt, im Wesentlichen entlang der zweiten Raumrichtung 5b entlang des Kugelauflagers 45a verschoben wird.

Ebenso wird der dritte Schenkel 53 parallel zum ersten Schenkel 49 im Wesentlichen entlang der zweiten Raumrichtung 5b verschoben.

Der vierte Schenkel 55 wird während dieser Bewegung parallel zum zweiten Schenkel 51 ausgerichtet.

Bei dieser Bewegung wird zum einen ein Gelenkbereich 83 zwischen dem Befestigungsbereich 7 und dem ersten Ausleger 65, als auch die Filmscharniere 95 der ersten Parallelogrammführung 31 ausgelenkt.

Der Haltebereich 15 wird durch den zweiten Aktuator 61 entlang der zweiten Raumrichtung 5b verstellt. Dies ist durch eine erste zentrale Position 16a und eine zweite zentrale Position 16b des Haltebereichs 15 symbolisch dargestellt. Die erste zentrale Position 16a stellt dabei ein Zentrum des Haltebereichs 15 in der Einstellung des Halters 1 der Fig. 7 dar und ist mit einem punktiert gezeichneten Kreuz dargestellt. Entsprechend symbolisiert das mit einer durchgezogenen Linie gezeichnete Kreuz die zweite zentrale Position 16b, d.h. das Zentrum des Haltebereichs 15 in der in Fig. 8 gezeigten Einstellung. Der Haltebereich ist somit entlang der zweiten Raumrichtung 5b um die Strecke zwischen der ersten 16a und der zweiten zentralen Position 16b verstellt. Diese Verschiebung ist rein symbolisch gezeigt, der Betrag derselben ist somit nicht maßstäblich.

Bezüglich der in den vorigen Figuren beschriebenen Vorspannung 111 sei an dieser Stelle angemerkt, dass eine Bewegung entlang der zweiten Raumrichtung 5b von der Vorspannung 111 des ersten Aktuator 39 profitieren kann und somit keine weitere Vorspannung 111 durch den zweiten Aktuator 61, welche den Gelenkbereich 83 im Bereich der ersten Drehachse 67 vorspannt, notwendig ist.

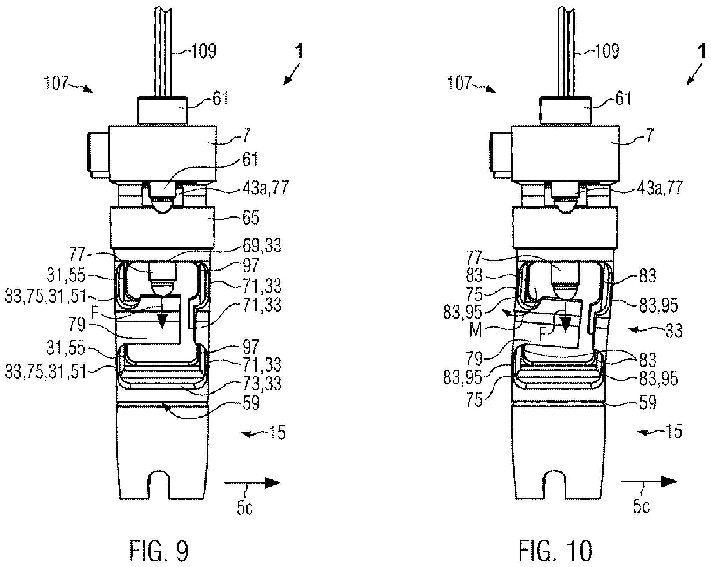

Mittels der Fig. 9 und Fig. 10 ist eine Verstellung des mechanischen Halters 1 entgegen der dritten Raumrichtung 5c gezeigt.

In der seitlichen Darstellung des mechanischen Halters 1 ist der Befestigungsbereich 7, der zweite Aktuator 61, der erste Ausleger 65, der zweite 51 und vierte Schenkel 55 der ersten Parallelogrammführung 31, sowie der fünfte 69, sechste 71, der siebente 73 und der achte Schenkel 75 der zweiten Parallelogrammführung 33 gezeigt. Der achte Schenkel 75 der zweiten Parallelogrammführung 33 entspricht dem zweiten Schenkel 51 der ersten Parallelogrammführung 31.

Ferner ist der Zwischenraum 59, der den dritten Schenkel 53 der ersten Parallelogrammführung 31 vom Haltebereich 15 trennt erkennbar. Ebenso ist der Stützschenkel 97 erkennbar. Das Werkzeug 109 betätigt den Schraubenkopf 43a des dritten Aktuators 77 und übt die Kraft F auf den zweiten Ausleger 79 aus. Dies führt zu einem Drehmoment M, welche die Gelenkbereiche 83, d.h. die Filmscharniere 95 der zweiten Parallelogrammführung 33 elastisch auslenkt und den achten Schenkel 75 der zweiten Parallelogrammführung 33 rotiert.

Aufgrund der Anordnung als Parallelogramm werden auch die Gelenkbereiche 83 bzw. die Filmscharniere 95 des vierten Schenkels 55 der ersten Parallelogrammführung 31 bzw. des Stützschenkels 97 elastisch und reversibel ausgelenkt.

Durch den dritten Aktuator 77 und das durch diesen hervorgerufene Drehmoment M und folgender Rotation des sechsten 71 und achten Schenkels 75 erfolgt eine Bewegung des Haltebereichs 15 entgegen der dritten Raumrichtung 5c.

Die zuvor beschriebenen Bewegungen entlang der Raumrichtungen 5a, 5b und 5c sind unabhängig voneinander. D.h., dass eine beliebige Linearkombination der einzelnen Bewegungen entlang der drei Raumrichtungen 5a, 5b und 5c (bzw. entgegen der dritten Raumrichtungen 5c) durch den erfindungsgemäßen mechanischen Halter 1 realisiert werden kann. Die Kombination der Auslenkungen kann zeitlich hintereinander oder zeitgleich erfolgen.

Wie aus Fig. 5 bis Fig. 10 erkennbar, erfolgt der Zugang zu den jeweiligen Aktuatoren 39, 61, und 77 jeweils von ein und derselben Seite 107, sodass der mechanische Halter 1 zur Betätigung lediglich von dieser einen Seite 107 zugänglich sein muss. Ferner ist der mechanische Halter 1 durch seine monolithische Ausgestaltung sehr kompakt.

### Bezugszeichen

- 1: mechanischer Halter
- 3: kartesisches Koordinatensystem
- 5: Raumrichtungen
- 5a: erste Raumrichtung
- 5b: zweite Raumrichtung
- 5c: dritte Raumrichtung
- 7: stationärer Befestigungsbereich
- 7a: Haltestruktur
- 7b: Befestigungselement
- 7c: Schraube
- 9: L-förmiger verwindungssteifer Körper
- 11: Befestigungsöffnung
- 13: Bohrung
- 15: Haltebereich
- 15a: Haltestruktur
- 15b: Haltefinger
- 15c: Anschlag
- 15d: Wandung
- 16a: erste zentrale Position
- 16b: zweite zentrale Position
- 17: Element
- 17a: Position
- 19: optisches Element
- 21: Linse
- 23: Ende
- 25: Haltevolumen
- 27: Halteöffnung
- 29: Parallelogrammführung
- 31: erste Parallelogrammführung
- 33: zweite Parallelogrammführung
- 35: Auslegerschenkel
- 37: Teilparallelogramm
- 39: erster Aktuator
- 41: Mikrometerschraube
- 43: Betätigungsende
- 43a: Schraubenkopf
- 45: Auflageende
- 45a: Kugelauflager
- 47: Ecke
- 49: erster Schenkel
- 51: zweiter Schenkel
- 53: dritter Schenkel
- 55: vierter Schenkel
- 57: Schenkel
- 59: Zwischenraum
- 61: zweiter Aktuator
- 63: Führungsnut
- 65: biegesteifer Ausleger
- 67: erste Drehachse
- 69: fünfter Schenkel
- 71: sechster Schenkel
- 73: siebenter Schenkel
- 75: achter Schenkel
- 77: dritter Aktuator
- 79: biegesteifer zweiter Ausleger
- 81: Tiefenrichtung
- 83: Gelenkbereich
- 85: Winkel
- 89: Ruhezustand
- 91: Bereich verringerter Steifigkeit
- 93: Bereich verringerter Materialdicke
- 95: Filmgelenk
- 97: Stützschenkel
- 99: geschlossene Seitenfläche
- 101: Parallelepiped
- 103: Schraffur
- 105: Quader
- 107: Seite
- 109: Werkzeug
- 110: Neigung
- 111: Vorspannung

- F: Kraft
- M: Drehmoment
- x: x-Achse
- y: y-Achse
- z: z-Achse

## Patentansprüche

1. Verstellbarer mechanischer Halter (1) zur Feinjustage der Position eines am Halter (1) anbringbaren oder angebrachten Elements (17), insbesondere eines optischen Elements (19) wie einer Linse (21), wobei der mechanische Halter (1) umfasst:
- einen stationären Befestigungsbereich (7) zur Befestigung des mechanischen Halters (1) an einer Haltestruktur (7a); und
- einen Haltebereich (15) zur Halterung des Elements (17),
**dadurch gekennzeichnet, dass** wenigstens eine erste Parallelogrammführung (31) zwischen dem Haltebereich (15) und dem Befestigungsbereich (7) vorgesehen ist, die den Haltebereich (15) beweglich mit dem Befestigungsbereich (7) verbindet und dass ferner ein erster beweglicher Aktuator (39) vorgesehen ist, mittels welchem der Haltebereich (15) durch die erste Parallelogrammführung (31) entlang einer ersten Raumrichtung (5a) beweglich ist.

2. Mechanischer Halter (1) nach Anspruch 1, **dadurch gekennzeichnet, dass** ein zweiter beweglicher Aktuator (61) vorgesehen ist, wobei der zweite bewegliche Aktuator (61) bewegungsübertragend mit einem biegesteifen Ausleger (65) verbunden ist, über den ein Drehmoment (M) auf mindestens einen Schenkel (57) der ersten Parallelogrammführung (31) übertragbar ist, wodurch der Haltebereich (15) durch die erste Parallelogrammführung (31) entlang einer zweiten Raumrichtung (5b) beweglich ist.

3. Mechanischer Halter (1) nach Anspruch 2, **dadurch gekennzeichnet, dass** zumindest der mit dem Drehmoment (M) beaufschlagbare Schenkel (57) um eine Drehachse (67) drehbar ist.

4. Mechanischer Halter (1) nach einem der Ansprüche 1 bis 3, **dadurch gekennzeichnet, dass** mindestens eine zweite Parallelogrammführung (33) zwischen dem Haltebereich (15) und dem Befestigungsbereich (7) vorgesehen ist, die den Haltebereich (15) beweglich mit dem Befestigungsbereich (7) verbindet und dass ferner ein dritter Aktuator (77) vorgesehen ist, mittels welchem der Haltebereich (15), unabhängig von einer Auslenkung der ersten Parallelogrammführung (31), durch die zweite Parallelogrammführung (33) entlang einer dritten Raumrichtung (5c) beweglich ist.

5. Mechanischer Halter (1) nach Anspruch 4, **dadurch gekennzeichnet, dass** ein biegesteifer zweiter Ausleger (79), der sich von einem Schenkel (57) der zweiten Parallelogrammführung (33) in eine Tiefenrichtung (81) erstreckt vorgesehen ist, wobei die Tiefenrichtung (81) im Wesentlichen senkrecht zur ersten Parallelogrammführung (31) orientiert ist, wobei durch den biegesteifen zweiten Ausleger (79) ein Drehmoment (M) auf mindestens einen Schenkel (57) der zweiten Parallelogrammführung (33) übertragbar ist, wodurch der Haltebereich (15) durch die zweite Parallelogrammführung (33) entlang der dritten Raumrichtung (5c) beweglich ist.

6. Mechanischer Halter (1) nach Anspruch 5, **dadurch gekennzeichnet, dass** der zweite Ausleger (79) innerhalb der zweiten Parallelogrammführung (33) angeordnet ist.

7. Mechanischer Halter (1) nach einem der Ansprüche 4 bis 6, **dadurch gekennzeichnet, dass** die Parallelogrammführungen (31, 33) monolithisch miteinander verbunden sind.

8. Mechanischer Halter (1) nach Anspruch 6 oder 7, **dadurch gekennzeichnet, dass** die erste Parallelogrammführung (31) einen zentralen, innerhalb der ersten Parallelogrammführung (31) angeordneten Auslegerschenkel (35) aufweist, der die Parallelogrammführung (31) in zwei Teilparallelogramme (37) aufteilt und an welchem der zweite Ausleger (79) befestigt ist.

9. Mechanischer Halter (1) nach einem der Ansprüche 1 bis 8, **dadurch gekennzeichnet, dass** die erste Parallelogrammführung (31) und/oder die zweite Parallelogrammführung (33) mindestens jeweils vier Gelenkbereiche (83) aufweist, wobei durch die Gelenkbereiche (83) ein Winkel (85) zwischen benachbarten Schenkeln (57) der entsprechenden Parallelogrammführung (31, 33) änderbar ist.

10. Mechanischer Halter (1) nach Anspruch 9, **dadurch gekennzeichnet, dass** die Gelenkbereiche (83) der Schenkel (57) der Parallelogrammführung (31, 33) durch einen Bereich verringerter Steifigkeit (91) ausgebildet sind.

11. Mechanischer Halter (1) nach einem der Ansprüche 4 bis 10, **dadurch gekennzeichnet, dass** mindestens ein Stützschenkel (97) vorgesehen ist, welcher mit der ersten (31) und der zweiten Parallelogrammführung (33) verbunden ist.

12. Mechanischer Halter (1) nach Anspruch 11, **dadurch gekennzeichnet, dass** die jeweils dem Befestigungsbereich (7) und/oder dem Haltebereich (15) zugewandten Schenkel (57) der ersten (31) und der zweiten Parallelogrammführung (33) jeweils eine geschlossene Seitenfläche (99) eines Parallelepipeds (101) ausbilden, wobei die Seitenflächen (99) winkelfest sind.

13. Mechanischer Halter (1) nach einem der Ansprüche 1 bis 12, **dadurch gekennzeichnet, dass** der Haltebereich (15) an einem Schenkel (57) der ersten Parallelogrammführung (31) befestigt und von den weiteren Schenkeln (57) der Parallelogrammführung (31) mechanisch entkoppelt ist.

14. Mechanischer Halter (1) nach einem der Ansprüche 2 bis 13, **dadurch gekennzeichnet, dass** alle Aktuatoren (39, 61, 77) von einer Seite (107) des mechanischen Halters (1) aus zugänglich sind.
